# DEMANDE DE BREVET EUROPEEN

(11) **EP 1 612 467 A2**
(43) Date de publication de la demande: **04.01.2006**
(21) Numéro de dépôt: 05291378.7
(22) Date de dépôt: 27.06.2005
(51) Int. Cl.: F16L 33/22, F16L 19/08, G01B 3/04

(54) **Dispositif de raccord d'un tuyau, procédé de montage associé et dispositif de tirette**

(30) Priorité: 30.06.2004 FR 0407246
(71) Demandeur: Chuchu-Decayeux, 80520 Woincourt (FR)
(72) Inventeur: Caron, Christophe, 80132 Quesny-le-Montant (FR)
(74) Mandataire: Casalonga, Axel

(57) **Abrégé**

Le dispositif de raccord de tuyau (2), notamment de tuyau en matière synthétique, comprend un corps (3) à l'intérieur duquel est montée une pièce de serrage (4), un manchon (6) en contact avec une surface d'appui (3j) dudit corps et comprenant une portion de support (6a) destinée à supporter le tuyau. Le dispositif comprend une bague de compression (8) comprenant une surface de contact avec une surface extérieure du tuyau apte à comprimer radialement le tuyau et des éléments de retenue axiale (8d,8f) dirigés vers l'intérieur et destinés à coopérer avec la surface extérieure du tuyau, ainsi qu'une bague de positionnement (5) de la pièce de serrage (4).

## Description

La présente invention concerne un dispositif de raccord de tuyau, notamment de tuyau en matière synthétique, destiné à assurer le transport de fluides, ainsi qu'un procédé de montage du tuyau à l'intérieur du dispositif de raccord.

L'invention a également pour objet un dispositif de tirette destiné à être monté sur un tel dispositif.

La présente invention concerne plus particulièrement un dispositif de raccord de tuyau comprenant un corps à l'intérieur duquel est montée une pièce de serrage, un manchon en contact avec une surface d'appui dudit corps et comprenant une portion de support destinée à supporter le tuyau. Le dispositif comprend, également, une bague de compression comprenant une surface de contact avec une surface extérieure du tuyau apte à comprimer radialement le tuyau.

On connaît des dispositifs de raccord comprenant un corps, un écrou de serrage se logeant à l'intérieur du corps, un manchon en laiton comprenant une surface extérieure munie d'éléments en saillie formant crans et destiné à être monté à force à l'intérieur d'un tuyau en matière synthétique. De tels dispositifs comprennent également une bague de compression radiale apte à serrer le tuyau sur le manchon cranté lors du vissage de l'écrou sur le corps du raccord, les crans du manchon formant ainsi moyen de retenue axiale du tuyau.

De tels dispositifs présentent l'inconvénient de nécessiter un emmanchement à force du manchon à l'intérieur du tuyau pouvant engendrer une détérioration du tuyau et générer ainsi un fonctionnement défaillant du raccord avec d'éventuelles fuites de fluides.

L'utilisation de tels manchons crantés nécessite, en outre, le démontage complet du raccord afin de pouvoir monter le tuyau sur le manchon. Un tel démontage génère généralement une intrusion d'éléments étrangers à l'intérieur du raccord, notamment lorsque les raccords sont montés dans un environnement poussiéreux, et engendre un risque important de perte d'éléments du raccord.

La présente invention a donc pour objet de remédier à ces inconvénients en proposant un dispositif de raccord permettant un montage particulièrement aisé d'un tuyau.

A cet effet, le dispositif de raccord de tuyau, notamment de tuyau en matière synthétique, comprend un corps à l'intérieur duquel est montée une pièce de serrage, un manchon en contact avec une surface d'appui dudit corps et comprenant une portion de support destinée à supporter le tuyau. Le dispositif comprend également une bague de compression pourvue d'éléments de retenue axiale dirigés vers l'intérieur et destinés à coopérer avec une surface extérieure du tuyau de manière à comprimer radicalement le tuyau.

Le dispositif comprend, en outre, une bague de position montée axialement en contact entre une surface radiale du corps et une surface radiale de la pièce de serrage, ladite bague de position formant butée axiale de la pièce de serrage de manière à obtenir un montage prédéterminé de la pièce de serrage à l'intérieur du corps.

Avec un tel dispositif, il devient possible de pouvoir monter le tuyau sur le manchon de manière particulièrement facile, ledit manchon étant dépourvu de moyens de retenue axiale du tuyau. Le raccord présente ainsi l'avantage de ne pas nécessiter d'outil spécifique pour monter le manchon à l'intérieur du tuyau. En effet, une simple poussée axiale permet le montage du manchon à l'intérieur du raccord sans démontage dudit raccord.

Les efforts exercés sur le tuyau lors de son montage se trouvent ainsi particulièrement réduits, permettant ainsi de limiter sensiblement un endommagement du tuyau et un éventuel dysfonctionnement du raccord.

Un tel dispositif présente également l'avantage de permettre un démontage aisé du tuyau permettant par exemple de repositionner le tuyau dans le cas d'un mauvais montage sur le raccord, de remplacer rapidement le tuyau, ou encore d'utiliser le raccord ainsi que le manchon pour une autre application.

Un tel dispositif présente également l'avantage de comprendre une bague de compression comprenant les éléments de retenue axiale qui sont mobiles radialement. En d'autres termes, la bague de compression permet non seulement de comprimer radialement le tuyau mais également de le retenir axialement à l'intérieur du corps grâce aux moyens de retenue axiale. Il n'est donc pas nécessaire de prévoir des moyens de retenue axiale au niveau du manchon.

Par ailleurs, un tel dispositif présente l'avantage de comprendre une bague de position permettant d'effectuer un pré-serrage du raccord de manière à obtenir une mise en position prédéterminée de la pièce de serrage à l'intérieur du corps du raccord. La bague de position forme ainsi une cale permettant le positionnement relatif de la pièce de serrage et de l'écrou.

Une telle mise en position de la pièce de serrage permet notamment de précontraindre axialement les éléments se trouvant à l'intérieur du raccord de manière à éviter un éventuel déplacement à l'intérieur du corps. Une telle précontrainte permet ainsi d'obtenir un ensemble unitaire pouvant être manipulé, transporté avec des risques de séparation accidentelle de ses éléments particulièrement faibles.

Une telle bague de position formant cale présente également l'avantage d'obtenir un raccord pré-monté dans lequel la bague de compression est sollicitée uniquement axialement. En d'autres termes, la bague de position permet d'éviter une sollicitation radiale de la bague de compression par la pièce de serrage. Il devient ainsi possible d'emmancher le tuyau à l'intérieur du corps du raccord par simple poussée axiale, sans avoir à démonter ledit raccord et sans utiliser un outil spécifique. Un tel raccord présente ainsi l'avantage de permettre le montage d'un tuyau, notamment en fond de raccord, sans démontage du raccord réduisant sensiblement les risques de pertes des éléments à l'intérieur du raccord ainsi que le temps de montage.

La surface extérieure de la portion de support du manchon est avantageusement sensiblement lisse.

Dans un mode de réalisation, la bague de compression comprend une portion de fixation maintenue axialement par la pièce de serrage, et une portion de retenue prolongeant axialement la portion de fixation et comprenant les éléments de retenue axiale. La portion de retenue peut comprendre au moins deux pattes axiales comprenant les éléments en saillie dirigés vers l'intérieur.

Une telle bague de compression radiale apte à comprimer radialement le tuyau sur le manchon lors du vissage de la pièce de serrage à l'intérieur du corps permet de réaliser le maintien axial du tuyau de manière particulièrement efficace.

En outre, dans le cas d'un éventuel effort de traction appliqué sur le tuyau après le montage dudit tuyau à l'intérieur du raccord, les pattes axiales sont aptes à coopérer avec une surface interne de l'écrou, par exemple contre une portion tronconique, et se déforment de manière à se resserrer sur le tuyau et à empêcher toute translation axiale.

Les pattes axiales de la bague de compression, avantageusement réalisée en matière synthétique moulée, permettent en outre une utilisation de la bague pour d'autres tuyaux, les pattes axiales étant déformables élastiquement et reprenant leur forme après chaque montage.

Dans un mode de réalisation, le dispositif comprend également une réglette reliée à la bague de position et apte à être séparée de la bague de position pour vérifier le montage d'un tuyau à l'intérieur dudit corps.

La bague de position présente avantageusement une épaisseur axiale sensiblement égale à celle de la réglette.

De préférence, la réglette comprend, à une extrémité axiale, un talon destiné à venir en contact avec une surface frontale du tuyau, la distance séparant ledit talon et l'autre extrémité axiale de la réglette correspondant sensiblement à la longueur du tuyau pouvant être emmanché à l'intérieur du raccord.

Un tel dispositif présente l'avantage de permettre le contrôle de la longueur d'emboîtement du tuyau à l'intérieur du corps du raccord après le vissage de la pièce de serrage. En effet, après avoir mis en place un repère sur le tuyau à l'aide de la réglette, il devient possible de vérifier que le tuyau est correctement monté à l'intérieur du raccord en vérifiant que le repère tracé est un regard d'une surface frontale de la pièce de serrage. Le tuyau est correctement monté à l'intérieur du raccord si une extrémité axiale du tuyau est en butée contre une collerette radiale du manchon.

En outre, la réglette permet également de vérifier, qu'après avoir retiré la bague de position et vissé la pièce de serrage à l'intérieur du corps, le tuyau est toujours correctement monté à l'intérieur du raccord. En d'autres termes, la réglette permet de vérifier qu'il n'y a pas eu un glissement axial du tuyau à l'intérieur du raccord lors du vissage de la pièce de serrage.

Une telle réglette permet ainsi de contrôler le positionnement du tuyau à l'intérieur du raccord avant et après avoir retiré la bague de position permettant ainsi de réduire sensiblement le risque de montage défaillant du tuyau à l'intérieur du corps.

Avantageusement, le talon, la réglette et la bague de position sont monoblocs.

L'invention concerne également un dispositif de tirette mobile comprenant une bague de position permettant de limiter le déplacement d'un élément annulaire à l'intérieur d'un autre élément annulaire, et une réglette monobloc avec ladite bague de position pouvant être séparée de la bague de position de manière à vérifier le positionnement relatif d'un élément annulaire par rapport à l'autre élément.

L'invention concerne enfin un procédé de montage d'un tuyau à l'intérieur d'un raccord, notamment d'un tuyau en matière synthétique destiné à assurer le transport de fluides, comprenant un corps à l'intérieur duquel vient se monter une pièce de serrage, et dans lequel on monte un manchon de support à l'intérieur du raccord, on monte axialement en contact un joint d'étanchéité entre le manchon de support et une bague de compression du tuyau, caractérisé par le fait qu'il comprend les étapes au cours desquelles :
- on monte une bague de position en contact avec une surface frontale du corps,
- on monte la pièce de serrage à l'intérieur du corps de manière qu'une surface frontale de l'écrou soit en contact avec la bague de position du côté opposé au corps,
- on met en place un repère sur le tuyau en utilisant une réglette de longueur prédéterminée,
- on monte le tuyau à l'intérieur du corps au niveau du manchon de support de manière que le repère tracé soit en regard d'une surface frontale de l'écrou,
- on retire la bague de position,
- on monte la pièce de serrage de manière qu'une surface frontale du corps soit en contact avec une surface frontale de l'écrou, et
- on vérifie que l'écart entre une surface frontale de l'écrou et le repère tracé correspond à l'épaisseur de la réglette.

La présente invention sera mieux comprise à la lecture de la description détaillée d'un mode de réalisation pris à titre d'exemple nullement limitatif et illustré par les dessins annexés, sur lesquels :
- la figure 1 est une vue d'un dispositif de raccord selon la présente invention,
- la figure 2 est une vue en coupe du dispositif de raccord selon l'axe II-II de la figure 1,
- la figure 3 est une vue éclatée du dispositif de raccord selon la figure 1 montrant schématiquement le sens de montage des éléments du dispositif de raccord de la figure 1,
- la figure 4 est une vue en perspective d'une bague de compression du dispositif de raccord selon l'invention, et
- la figure 5 est une vue en perspective d'une tirette, du dispositif de raccord selon l'invention, comprenant une bague de position et une réglette.

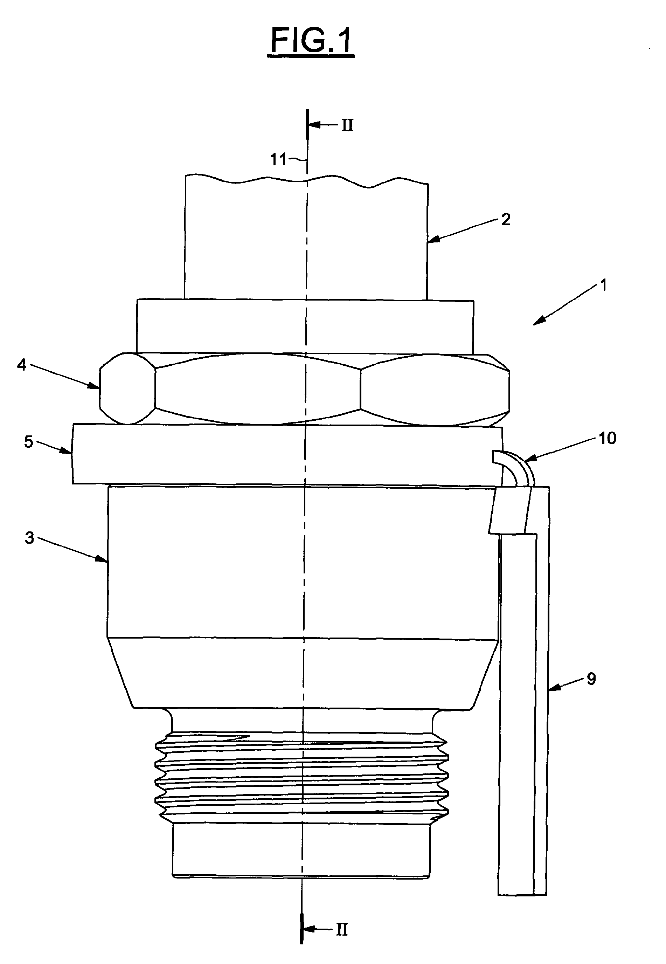

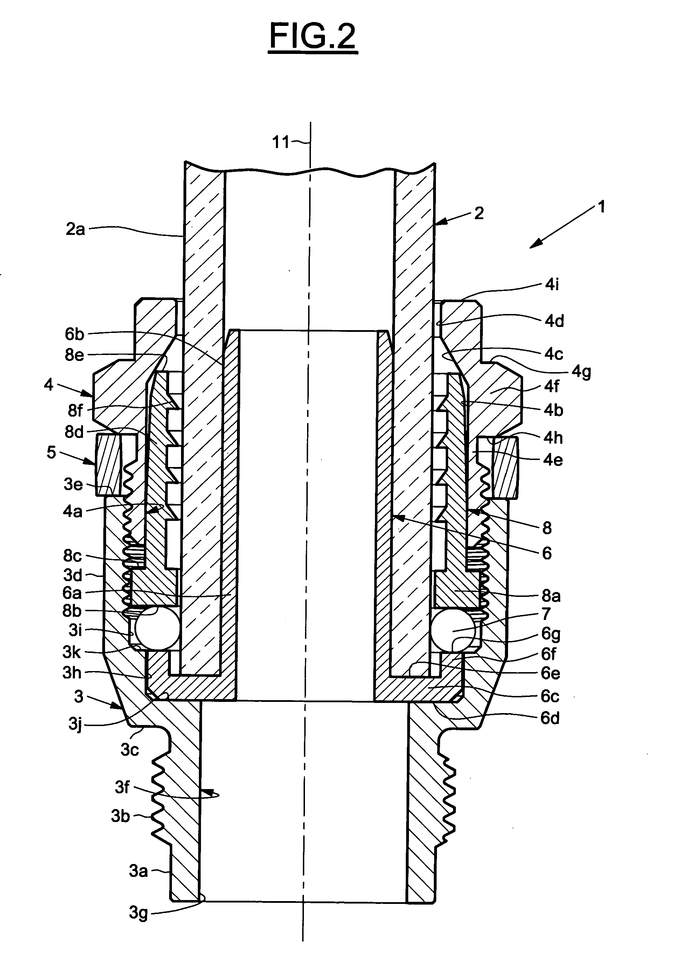

Sur les figures 1 et 2, on a représenté un dispositif de raccord 1 à serrage mécanique destiné à être utilisé pour le transport de fluides, par exemple du gaz. On conçoit également aisément que le dispositif de raccord 1 peut également convenir pour le transport de liquides, par exemple de l'eau.

Le dispositif de raccord 1 d'un tuyau 2 en matière synthétique, par exemple en polyéthylène, comprend un corps 3 annulaire, d'axe 11, une pièce de serrage, tel qu'un écrou de serrage 4 annulaire, montée à l'intérieur du corps 3, et une bague de position 5 annulaire montée axialement entre le corps 3 et l'écrou de serrage 4.

Comme illustré plus visiblement sur la figure 2, le corps 3 du raccord, réalisé ici en laiton, comprend une surface axiale extérieure 3a sensiblement cylindrique comprenant un filet 3b permettant la fixation du raccord 1. La surface axiale extérieure 3a est prolongée du côté opposé à une extrémité axiale du corps 3, par une surface arrondie, puis par une surface radiale 3c s'étendant vers l'extérieur. A partir du bord extérieur de la surface radiale 3c, s'étend une surface tronconique qui se prolonge axialement par une surface axiale 3d extérieure cylindrique prolongée, à partir son extrémité libre, vers l'intérieur, par une surface radiale 3e frontale.

Le corps 3 du raccord comprend un alésage 3f étagé comprenant un premier étage 3g, s'étendant axialement à partir d'une extrémité axiale du corps 3, qui est prolongé axialement du côté opposé à l'extrémité axiale du corps 3 par un second étage 3h de plus grand diamètre, qui se prolonge axialement du côté opposé au premier étage 3g, par un troisième étage 3i de plus grand diamètre et comprenant une portion filetée. Des surfaces radiales 3j, 3k sont ainsi ménagées respectivement entre le premier étage 3g et le second étage 3h, et entre le second étage 3h et le troisième étage 3i. La surface radiale 3j, correspondant à l'agrandissement de section de l'alésage étagé 3f, offre une surface d'appui pour un manchon 6 monté à l'intérieur du corps 3.

Le manchon 6, de forme générale annulaire, est réalisé ici en une matière synthétique, par exemple en polyéthylène, conforme à une utilisation avec des produits gazeux. Le manchon 6 peut être réalisé notamment par moulage. Bien entendu, le matériau du manchon 6 peut être adapté en fonction de la nature des fluides à transporter.

Le manchon 6 comprend une portion axiale 6a annulaire, dont une partie est en saillie axiale par rapport à la surface radiale 3e frontale du corps 3. La surface extérieure 6b de la portion axiale 6a est sensiblement lisse. En d'autres termes, la surface extérieure 6b est dépourvue d'élément formant saillie radiale.

La portion axiale 6a se prolonge, à une extrémité axiale, par une collerette radiale 6c délimitée axialement par des surfaces radiales 6d et 6e opposées, la surface radiale 6d étant en contact avec la surface radiale 3j du corps 3. La collerette radiale 6c présente ici une dimension radiale sensiblement supérieure à celle de la surface radiale 3j. La collerette radiale 6c est prolongée axialement, à partir son extrémité extérieure, du côté de la portion axiale 6a, par une portion axiale 6f annulaire, emmanchée à l'intérieur de l'alésage 3h du corps 3.

Le manchon 6, par l'intermédiaire des surfaces radiales 3j et de l'alésage 3h, est ainsi maintenu en position à l'intérieur du corps 3. La portion axiale 6f comprend une surface radiale 6g prolongeant ici axialement vers l'intérieur la surface radiale 3k du corps 3. La portion axiale 6a, la collerette radiale 6c et la portion axiale 6f du manchon 6 sont monoblocs.

Le tuyau 2, réalisé en matière synthétique, est emmanché ici sur la portion axiale 6a du manchon 6, la surface radiale 6d offrant une surface d'appui pour une extrémité axiale du tuyau 2.

Un joint d'étanchéité 7, réalisé en matière synthétique souple par exemple en caoutchouc, et apte à empêcher l'intrusion d'éléments extérieurs indésirables, est disposé à l'intérieur du corps 3, autour du tuyau 2. En d'autres termes, le joint d'étanchéité 7 est disposé radialement entre le tuyau 2 et le troisième étage 3i de l'alésage 3f du corps 3. Le joint d'étanchéité 7 est monté axialement en contact avec la surface radiale 6g du manchon 6.

Une bague de compression 8, de forme générale annulaire, est montée à l'intérieur du corps 3 autour du tuyau 2. La bague de compression 8, réalisée en matière plastique synthétique, est en contact axial avec le joint d'étanchéité 7 du côté opposé du manchon 6.

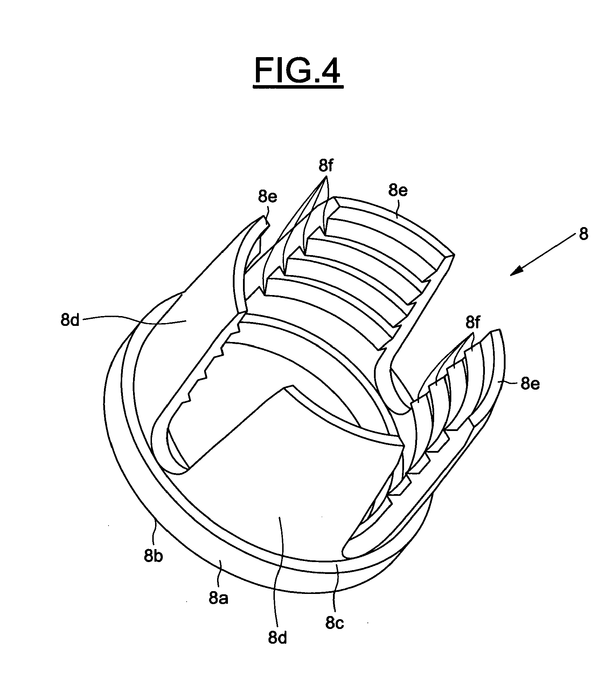

Comme illustré plus visiblement sur la figure 4, la bague de compression 8 comprend un anneau 8a comprenant deux surfaces radiales 8b et 8c, la surface radiale 8b étant en contact avec le joint d'étanchéité 7 (figure 2). L'anneau 8a est prolongé axialement du côté opposé au joint d'étanchéité 7, à partir d'un bord intérieur de la surface radiale 8b, par des pattes axiales 8d. Les pattes axiales 8d, ici au nombre de quatre, sont circonférentiellement régulièrement réparties. Les pattes axiales 8d, sensiblement tronconiques, présentent une dimension radiale réduite par rapport à la dimension radiale de l'anneau 8a. En d'autres termes, la surface extérieure des pattes axiales 8d est décalée radialement vers l'intérieur par rapport au bord extérieur de l'anneau 8a.

Chaque patte axiale 8d se prolonge vers l'intérieur, à proximité d'une surface radiale 8e frontale, par des éléments formant saillies 8f annulaires recourbées vers le bas en direction du corps 3 (figure 2). Les saillies 8f, ici au nombre de quatre, s'étendent sensiblement radialement entre les bords latéraux d'une patte axiale 8d. Les saillies 8f sont décalées axialement entre elles en direction de l'anneau 8a. Les saillies 8f sont aptes à venir en contact avec la surface extérieure cylindrique 2a du tuyau 2 et à permettre le maintien en position dudit tuyau 2 par rapport au corps 3 (figure 2). En d'autres termes, les saillies 8e sont inclinées de façon à interdire par effet d'arc-boutement un déplacement axial du tuyau 2. Les pattes axiales 8d et les saillies 8f forment des éléments de retenue axiale du tuyau 2.L'anneau de fixation 8a, les pattes axiales 8d et les saillies 8f sont monobloc.

Sur la figure 2, l'anneau 8a est monté radialement entre le tuyau 2 et le corps 3. Une portion des pattes axiales 8d, en saillie par rapport à la surface radiale 3e frontale du corps 3, est montée radialement entre le tuyau 2 et l'écrou 4 de serrage.

L'écrou 4 de serrage, de forme générale annulaire, comprend un alésage 4a comprenant une première portion 4b sensiblement cylindrique, en contact avec la surface extérieure des pattes axiales 8d, qui se prolonge, à partir d'une extrémité axiale, par une portion tronconique 4c s'étendant sensiblement vers l'intérieur. La portion tronconique 4c peut comprendre une pente comprise entre 20 et 40°. De préférence, l'inclinaison de la pente est de l'ordre de 30°. La portion tronconique 4c est prolongée axialement, à partir de l'extrémité intérieure, par une portion cylindrique 4d.

L'écrou de serrage 4 comprend une portion axiale 4e comprenant, à une extrémité axiale, une portion filetée apte à coopérer avec la portion filetée du troisième étage 3j du corps 3. La portion axiale 4e comprend, à proximité de la portion filetée, une nervure 4f délimitée par deux surfaces radiales 4g, 4h opposées et dirigées radialement vers l'extérieur. La nervure 4g comprend ici une surface extérieure comprenant six pans de manière à permettre le serrage de l'écrou 4 avec une clé.

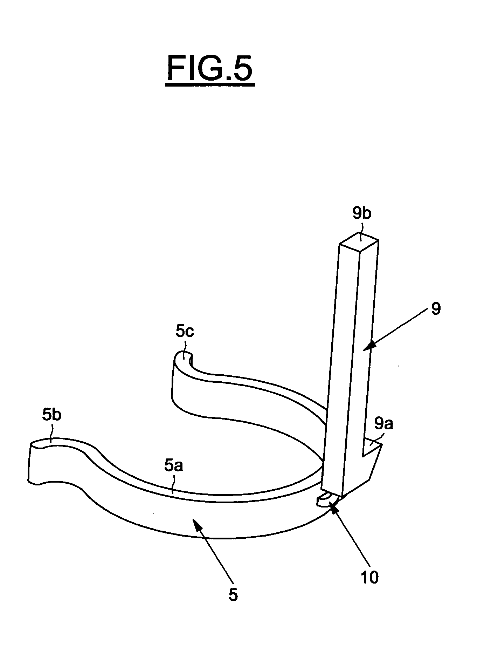

La bague, ou cale, de position 5, par exemple en matière synthétique souple ou rigide, est montée axialement entre le corps 3 et l'écrou de serrage 4 de manière à être en contact sur deux faces opposées avec les surfaces radiales 3e, 4h. Comme illustré plus visiblement sur la figure 5, la bague de position 5 comprend un anneau 5a ouvert présentant en section un profil en forme de C. En d'autres termes, l'anneau 5a s'étend circonférentiellement sur environ 270°. Bien entendu, il est également envisageable de prévoir une dimension angulaire sensiblement différente, mais étant toutefois de préférence supérieure à 180° pour assurer une bonne mise en position de l'anneau 5a sur le raccord 1.

La bague 5 de position présente une dimension radiale adaptée pour laisser subsister un léger jeu radial entre l'anneau 5a et la portion filetée de l'écrou 4. Les extrémités libres de l'anneau 5a sont prolongées vers l'extérieur par des portions courbes 5b, 5c de manière à faciliter la mise en position de la bague de position 5 sur l'écrou de serrage 4 (figure 2).

Bien entendu, il est également envisageable de prévoir une bague de position 5 de conception différente. On peut par exemple prévoir une bague de position sensiblement annulaire pourvu de portions d'extrémités se chevauchant circonférentiellement l'une sur l'autre.

La bague de position 5 est prolongée, du côté opposé à l'ouverture du C sensiblement au niveau d'un plan de symétrie de l'anneau 5a, par une tige formant réglette 9, par l'intermédiaire d'un élément de jonction 10 d'épaisseur relativement faible. L'élément de jonction 10 est dimensionné de manière à permettre un détachement aisé de la réglette 9 par rapport à la bague de position 5.

La réglette 9, de forme générale rectangulaire, est replié ici sensiblement axialement le long du corps 3 du raccord (figure 2). La réglette 9 présente une épaisseur radiale sensiblement égale à l'épaisseur axiale de l'anneau 5a. La réglette 9 comprend, à une extrémité axiale, un talon 9a faisant saillie par rapport au bord latéral de la réglette 9. La distance entre le talon 9a et la surface radiale 9b de l'extrémité axiale opposée de la réglette 9 est sensiblement égale à la distance séparant la surface radiale 3j du corps 3 à la surface radiale 4i frontale de l'écrou 4 diminuée de l'épaisseur radiale de la collerette 6c du manchon, lorsque la bague de position 5 est en contact sur deux faces opposées avec les surfaces radiales 3e, 4h. Le talon 9a, la réglette 9, l'élément de jonction 10, la bague de position 5 et l'anneau 5a sont monoblocs. La bague de position 5 et la réglette 9 forme une tirette.

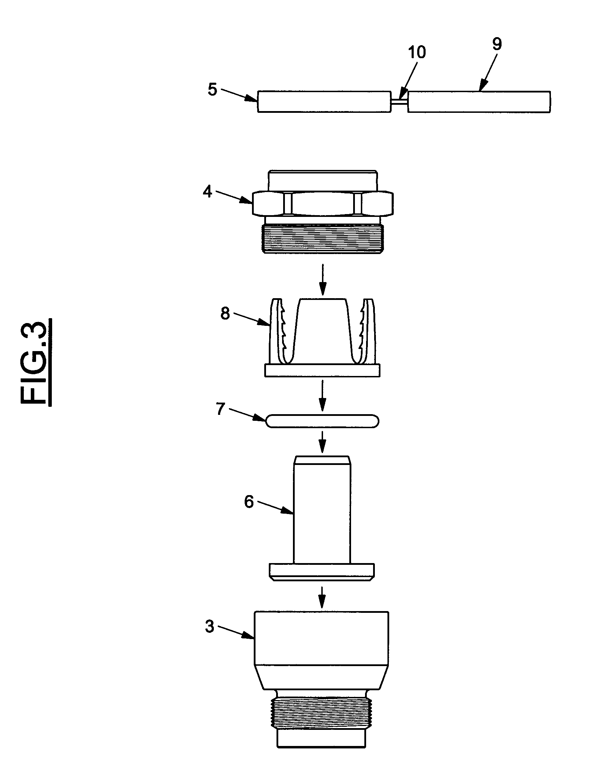

Pour réaliser le montage du dispositif de raccord 1, on assemble les différents éléments du raccord comme représenté schématiquement sur la figure 3.

En se référant à la figure 2, on monte le manchon 6 à l'intérieur du corps 3 contre la surface radiale 3j, on dispose ensuite le joint d'étanchéité 7 dans le corps 3 de façon que le joint d'étanchéité soit en contact avec la surface radiale 6g du manchon 6, on monte ensuite la bague de compression 8 dans le corps 3 de manière que la surface radiale 8c soit en contact avec le joint d'étanchéité 7 et on monte l'écrou de serrage 4 à l'intérieur du corps 3 de manière que leurs filetage et taraudage respectifs soient suffisamment écartées de façon à permettre un montage aisée de la bague de la position 5. On dispose la bague de position 5 en contact contre la surface radiale 3e frontale du corps 3 puis on vient visser l'écrou de serrage 4 à l'intérieur du corps 3 jusqu'à que la surface radiale 4h vienne en contact de la bague de position 5 formant ainsi cale de positionnement de l'écrou 4 par rapport au corps 3. On procède ensuite au pliage de la réglette 9 le long du corps 3 du raccord.

L'épaisseur axiale de la bague de position 5 permet ainsi de pré-assembler le dispositif de raccord 1 d'une manière prédéterminée permettant un montage aisé du tuyau 2 à l'intérieur du corps 3 sans nécessiter un démontage du raccord 1. En d'autres termes, la bague de position 5 présente une épaisseur axiale apte à permettre le pré-serrage de l'écrou 4 à l'intérieur du corps 3 sans contraindre radialement la bague de compression 8 tout en garantissant une précontrainte axiale des éléments à l'intérieur du corps 3.

On dispose ainsi d'un dispositif de raccord aisément transportable avec un risque de perte de pièces sensiblement réduit et permettant aisément de monter un tuyau 2 sur le manchon de manière qu'une surface radiale frontale du tuyau 2 soit en contact avec la surface radiale 6f du manchon 6, sans avoir à démonter le raccord 1.

Pour réaliser le montage du tuyau 2 à l'intérieur du corps 3, on détache, au préalable, la réglette 9 de la bague de position 5, puis on dispose le talon 9a de la réglette 9 en appui contre la surface frontale du tuyau 2 destiné à être insérée à l'intérieur du raccord 1 de manière que la réglette 9 soit orientée sensiblement suivant l'axe du tuyau 2. On trace un repère, par exemple avec un crayon, sur le tuyau 2. On emmanche ensuite le tuyau 2 sur le manchon 6 jusqu'à que le repère tracé sur le tuyau soit en regard de la surface radiale 4i frontale de l'écrou correspondant à une mise en butée de l'extrémité axiale du tuyau contre la surface radiale 6e.

On retire ensuite la bague de position 5 de manière à permettre le serrage de l'écrou à l'intérieur du corps 3 progressivement jusqu'à que la surface radiale 4f de l'écrou vienne en appui sur la surface radiale 3e frontale du corps 3. Un tel rapprochement axial de l'écrou 4 vers le corps 3 entraîne une compression du joint d'étanchéité 7 lorsque l'écrou 4 est en contact avec la surface radiale 8b de la bague 8, ainsi qu'une déformation de la bague de compression 8, par l'intermédiaire de la surface tronconique 4c, qui se contracte radialement de manière à ce que les saillies 8f de ladite bague 8 viennent en contact avec la surface extérieure 2a du tuyau et permettent ainsi un maintien axial du tuyau 2. La surface tronconique 4c permet également de provoquer un resserrement de la bague de compression 8 sur le tuyau 2 dans le cas d'un éventuel effort de traction appliqué sur ledit tuyau 2.

En variante, il est également envisageable de prévoir une bague 5 de position circonférentiellement continue, réalisée en matière synthétique souple telle que du caoutchouc, et apte à se déformer radialement vers l'extérieur lors du rapprochement axial de l'écrou 4 vers le corps 3, par exemple pour se déplacer axialement au niveau de l'écrou 4, pour permettre le contact de la surface radiale 4f de l'écrou avec la surface radiale 3e frontale du corps 3

Après avoir fini le serrage de l'écrou à l'intérieur du corps, on vérifie que le tuyau 2 ne s'est pas déplacé lors dudit serrage, en positionnant la réglette 9 dans le sens de son épaisseur contre la surface radiale 4i frontale de l'écrou 4 et en regardant si le repère tracé sur le tuyau vient en regard de la face opposée de la réglette 9 qui est en appui contre l'écrou.

Le raccord offre de nombreux avantages, parmi lesquels le montage d'un tuyau à l'intérieur du raccord sans démontage, le serrage du raccord sans nécessiter d'outil spécifique tel qu'une clé dynamométrique, et la vérification rapide et efficace du bon positionnement du tuyau à l'intérieur du raccord avant et après le vissage de l'écrou de serrage à l'intérieur du corps du raccord.

## Revendications

1. Dispositif de raccord de tuyau (2), notamment de tuyau en matière synthétique, comprenant un corps (3) à l'intérieur duquel est montée une pièce de serrage (4), un manchon (6) en contact avec une surface d'appui (3j) dudit corps et comprenant une portion de support (6a) destinée à supporter le tuyau, le dispositif comprenant une bague de compression (8) pourvue d'éléments de retenue axiale (8d, 8f) dirigés vers l'intérieur et destinés à coopérer avec une surface extérieure du tuyau de manière à comprimer radicalement le tuyau, **caractérisé par le fait qu'**il comprend, en outre, une bague de position (5) montée axialement en contact entre une surface radiale (3e) du corps (3) et une surface radiale (4h) de la pièce de serrage (4), ladite bague de position formant butée axiale de la pièce de serrage de manière à obtenir un montage prédéterminé de la pièce de serrage à l'intérieur du corps.

2. Dispositif selon la revendication 1, dans lequel la surface extérieure de la portion de support (6a) du manchon est sensiblement lisse.

3. Dispositif selon la revendication 1 ou 2, dans lequel la bague de compression comprend une portion de fixation maintenue axialement par la pièce de serrage (4) et une portion de retenue (8d) prolongeant axialement la portion de fixation et comprenant les éléments de retenue axiale (8d, 8f).

4. Dispositif selon la revendication 3, dans lequel la portion de retenue comprend au moins deux pattes axiales comprenant les éléments en saillie (8d, 8f) dirigés vers l'intérieur.

5. Dispositif selon l'une quelconque des revendications précédentes, dans lequel il comprend, en outre, une réglette (9) reliée à la bague de position (5) et apte à être séparée de la bague de position pour vérifier le montage d'un tuyau à l'intérieur dudit corps.

6. Dispositif selon la revendication 5, dans lequel la bague de position (5) présente une épaisseur axiale sensiblement égale à celle de la réglette.

7. Dispositif selon les revendications 5 ou 6, dans lequel la réglette (9) comprend, à une extrémité axiale, un talon (9a) destiné à venir en contact avec une surface frontale du tuyau (2), la distance séparant ledit talon et l'autre extrémité axiale de la réglette correspondant sensiblement à la longueur du tuyau pouvant être emmanché à l'intérieur du raccord.

8. Dispositif selon la revendication 7, dans lequel le talon (9a), la réglette (9) et la bague de position (5) sont monoblocs.

9. Dispositif de tirette comprenant une bague de position (5) permettant de limiter le déplacement d'un élément annulaire à l'intérieur d'un autre élément annulaire, **caractérisé par le fait qu'**il comprend, en outre, une réglette monobloc avec ladite bague de position pouvant être séparée de la bague de position de manière à vérifier le positionnement relatif d'un élément annulaire par rapport à l'autre élément.

10. Procédé de montage d'un tuyau à l'intérieur d'un raccord, notamment d'un tuyau en matière synthétique destiné à assurer le transport de fluides, comprenant un corps à l'intérieur duquel vient se monter une pièce de serrage, et dans lequel on monte un manchon de support à l'intérieur du raccord, on monte axialement en contact un joint d'étanchéité entre le manchon de support et une bague de compression du tuyau, **caractérisé par le fait qu'**il comprend les étapes au cours desquelles :
- on monte une bague de position en contact avec une surface frontale du corps,
- on monte la pièce de serrage à l'intérieur du corps de manière qu'une surface frontale de l'écrou soit en contact avec la bague de position du côté opposé au corps,
- on met en place un repère sur le tuyau en utilisant une réglette de longueur prédéterminée,
- on monte le tuyau à l'intérieur du corps au niveau du manchon de support de manière que le repère tracé soit en regard d'une surface frontale de l'écrou,
- on retire la bague de position,
- on monte la pièce de serrage de manière qu'une surface frontale du corps soit en contact avec une surface frontale de l'écrou, et
- on vérifie que l'écart entre une surface frontale de l'écrou et le repère tracé correspond à l'épaisseur de la réglette.
>
